# EUROPÄISCHE PATENTSCHRIFT

(11) **EP 1 320 415 B1**
(45) Veröffentlichungstag und Bekanntmachung des Hinweises auf die Patenterteilung: **03.08.2005**
(21) Anmeldenummer: 01972004.4
(22) Anmeldetag: 05.09.2001
(51) Int. Cl.: B05B 7/24, F16N 7/32

(54) **VORRICHTUNG ZUR AUFBRINGUNG VON VERSPRÜHBAREN FLÜSSIGKEITEN**
DEVICE FOR THE APPLICATION OF SPRAYABLE FLUIDS
DISPOSITIF POUR L'APPLICATION DE LIQUIDES A PULVERISER

(30) Priorität: 09.09.2000 DE 10044600; 02.06.2001 DE 10127046; 31.08.2001 DE 20114393 U
(43) Veröffentlichungstag der Anmeldung: 25.06.2003
(73) Patentinhaber: Ecolab Inc., St. Paul, MN 55102-1390 (US)
(72) Erfinder: WEINERT, Harry, 09577 Niederwiesa (DE); SELBERTINGER, Josef, 83224 Staudach (DE); KÜPPER, Stefan, 40764 Langenfeld (DE)
(74) Vertreter: Gesthuysen, von Rohr & Eggert
(86) Internationale Anmeldenummer: PCT/EP2001/010222
(87) Internationale Veröffentlichungsnummer: WO 2002/020167

(56) Entgegenhaltungen:
- GB-A- 105 687
- GB-A- 2 093 373
- US-A- 2 578 102
- US-A- 2 819 928
- US-A- 5 985 366

## Beschreibung

Die Erfindung richtet sich auf eine Vorrichtung zur Aufbringung von mittels eines Fluides, insbesondere Druckluft, versprühbaren Flüssigkeiten, wie Farböle, Schmierstoffe, Desinfektionslösungen, Reinigungslösungen od. dgl., mit einer Druckluftzufuhrleitung und einer Flüssigkeitszufuhrleitung, wie z.B. in Dokument GB-2 093 373 gezeigt.

In der prioritätsbegründenden, nicht vorveröffentlichten Patentanmeldung DE-101 27 046 ist ein Verfahren und eine Anlage zur Aufrechterhaltung der Leichtgängigkeit von Transportketten beschrieben, wobei eine derartige Anlage insbesondere mit die Kette beaufschlagenden Sprühköpfen versehen ist, wobei als Funktionseinheit den Sprühköpfen z.B. Reinigungslösung und Druckluft zugeführt wird.

Das Ziel der vorliegenden Erfindung besteht darin, eine derartige Funktionseinheit weiter auszugestalten und insbesondere eine Möglichkeit zu schaffen, die zu versprühenden Stoffmengen exakt einstellen zu können bei äußerst einfacher Steuerung der miteinander verknüpften Elemente.

Mit einer Vorrichtung der eingangs bezeichneten Art wird diese Aufgabe gemäß der Erfindung dadurch gelöst, daß die Flüssigkeitszufuhrleitung einen Zylinderraum eines Tandemkolbens und die Druckluftzufuhrleitung den anderen Zylinderraum des Tandemkolbens beaufschlagt, wobei die Ableitung der Flüssigkeit aus dem entsprechenden Zylinderraum und der Druckkluft aus dem anderen Zylinderraum die Sprühdüse beaufschlagt.

Mit der Erfindung werden mit einfachen Mitteln eine ganze Reihe von Vorteilen erreicht. So kann das zur Sprühung herangezogene Fluid, z.B. die Druckluft, unmittelbar auch als Steuermedium herangezogen werden, gleichzeitig läßt sich durch das Vorsehen eines Tandemkolbens und dessen definierbaren Volumens eine genaue Einstellung der Menge der zu versprühenden Flüssigkeit, z.B. des Schmiermittels od. dgl., einstellen. Erkennbar läßt sich die vorliegende Erfindung insbesondere dort einsetzen, wo es auf eine genaue Einstellung der Auftragsmenge und der Kontrolle sowie der praxisgerechten Austragung dieser Stoffe kommt.

Gegenüber der bisherigen Möglichkeit, bei einer Zweistoffdüse die aufzutragende Flüssigkeit und die zum Versprühen notwendige Druckluft unmittelbar der Düse zuzuführen, was problemlos dann möglich ist, wenn nur eine Düse im System zum Versprühen herangezogen wird, liegt ein weiterer Vorteil der vorliegenden Erfindung darin, daß eine Vielzahl von Düsen über gleiche Systeme, wie Druckluft- oder Sprühmittelzufuhrleitungen, zusammen betrieben werden können bei genauester Einstellung. Da sich über die Leitungen zwangsläufig an mehreren Düsen Druckunterschiede einstellen, käme es zu unterschiedlichen Sprühergebnissen, würde man nicht dafür Sorge tragen, daß überall für entsprechende Zustände gesorgt wird, die gleiche Sprühbilder und gleichen Austrag der zu versprühenden Mittel gewährleisten.

U.a. sieht die Erfindung in Ausgestaltung hier vor, daß im Fördersystem der Flüssigkeitszufuhrleitung, wie an sich bekannt, ein Druckhalteventil und in der Druckluftzufuhrleitung ein Steuerventil vorgesehen ist, wobei in weiterer Ausgestaltung der Erfindung auch vorgesehen sein kann, daß in der Flüssigkeitsabfuhrleitung zur Düse ein Rückschlagventil und in der Druckluftableitung zur Düse eine Drossel vorgesehen ist.

Mit diesen Steuerelementen läßt sich erreichen, daß jeweils die gleichen Drücke im System an den unterschiedlichen Düsen bzw. Düsenköpfen herrschen. Die Funktionsweise der jeweilig herrschenden Druckunterschiede wird weiter unten näher beschrieben.

Schließlich sieht die Erfindung auch zur Dosierung der Sprühmenge vor, daß der Tandemkolben von einem Hubbegrenzer mit Feineinstellung zur Einstellung eines definierten Volumens des Flüssigkeitszylinderraumes versehen ist.

Weitere Merkmale, Einzelheiten und Vorteile der Erfindung ergeben sich aufgrund der nachfolgenden Beschreibung sowie anhand der Zeichnung. Diese zeigt in
- Fig. 1: ein Prinzipschaltbild der erfindungsgemäßen Vorrichtung sowie in
- Fig. 2 und 3: je einen Ausriß aus Fig. 1 mit dem Tandemkolben in unterschiedlichen Hubstellungen.

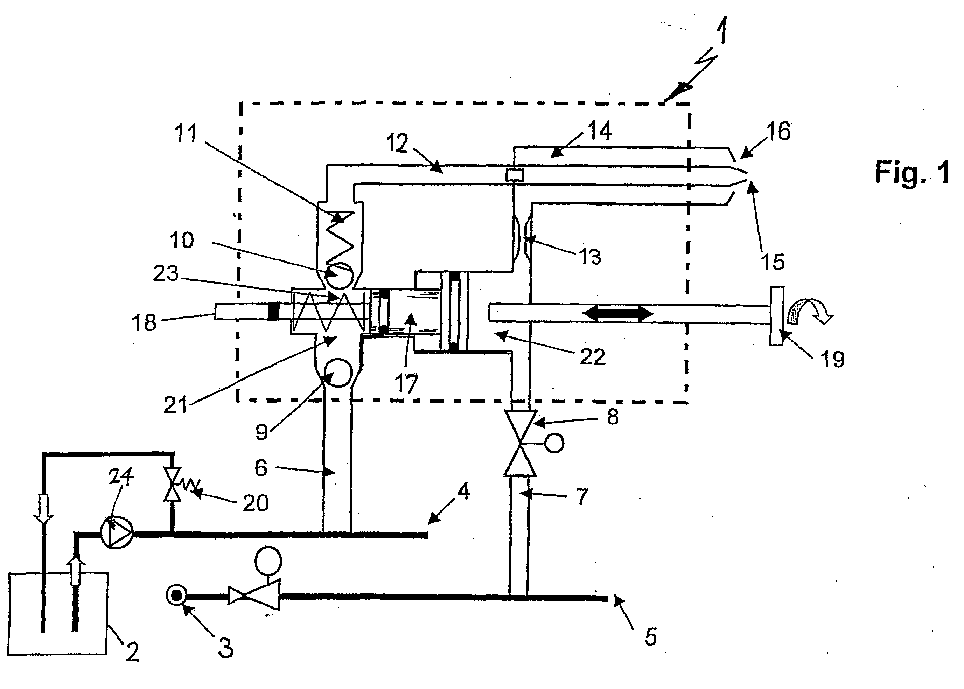

Die erfindungsgemäße allgemein mit 1 bezeichnete Vorrichtung ist in Fig. 1 durch einen gestrichelten Rahmen angedeutet, wobei sie über Systemelemente, beispielsweise nach der Anlage aus der prioritätsbegründenden DE-101 27 046 angeschlossen ist. Dabei ist beispielsweise ein Tank für die zu versprühende Flüssigkeit vorgesehen, mit 2 bezeichnet, und eine Druckluftquelle 3, wobei eine Flüssigkeitsverteilleitung 4 ebenso vorgesehen ist wie eine Druckluftverteilleitung 5, die zu unterschiedlichen erfindungsgemäßen Einheiten führen, was in Fig. 1 nicht näher dargestellt ist.

Über die Leitung 6 wird die Flüssigkeit der Vorrichtung 1 zugeführt. Über die Leitung 7 mit Ventil 8 wird die Druckluft der Vorrichtung 1 zugeführt. Im Weg der Flüssigkeit über die Leitung 6 passiert diese zunächst ein Rückschlagventil 9 und ein Ventil 10 mit Federbelastung 11 und die Leitung 12, wobei die Druckluft über die Leitung 7 und eine Blende 13 geführt ist und in einen Sprühluftkanal 14 gelangt, die die Flüssigkeitsleitung 12 umgibt und zum Flüssigkeitsdüsenmundstück 15 gelangt, wobei die Sprühluftaustrittsdüse mit 16 bezeichnet ist.

Kern der Vorrichtung 1 ist der Tandemkolben 17 in einem entsprechend gestalteten Zylinder, wobei die kleinere Seite des Tandemkolbens 17 mit einer Kolbenverlängerung 18 versehen ist und der querschnittlich größere, von Druckluft beaufschlagte Zylinderteil des Tandemkolbens 17 an einer mit 19 bezeichneten Feineinstellung versehen ist. Der von Flüssigkeit beaufschlagte Zylinderraum ist in den Figuren mit 21 bezeichnet, der von Druckluft beaufschlagte Zylinderraum mit 22, wobei über die Kolbenverlängerung 18 im Zylinderraum 21 eine Rückstellfeder, allgemein mit 23 bezeichnet, vorgesehen sein kann.

Die Wirkungsweise der Vorrichtung 1 ist dabei die folgende: Eine oder mehrere Vorrichtungen 1 sind mit den Flüssigkeitsverteilleitungen 4 und den Druckluftverteilleitungen 5 verbunden, wobei die zu versprühende bzw. auszutragende Flüssigkeit aus einem Tank 2 über eine Fördereinrichtung (Pumpe 24) der Zufuhrleitung 6 zum Zylinderraum 21 zugeführt wird.

Bei der Pumpe 24 kann es sich um jede Art von Pumpen handeln, Membranpumpe, Kreiselpumpe, Kolbenpumpe od. dgl. mit Druckhalteventil 20, um zu erreichen, daß in der Zufuhrleitung 6 bzw. im Leitungssystem 4 möglichst immer der gleiche Druck herrscht. Am Ende des Zylinderraumes 21 ist im Übergang zur zur Düse 15 führenden Leitung 12 ein federbelastetes Dosierventil 10,11 angeordnet, wobei der Druck des Druckhalteventiles 20 unter dem Druck dieses federbelasteten Dosierventiles liegt.

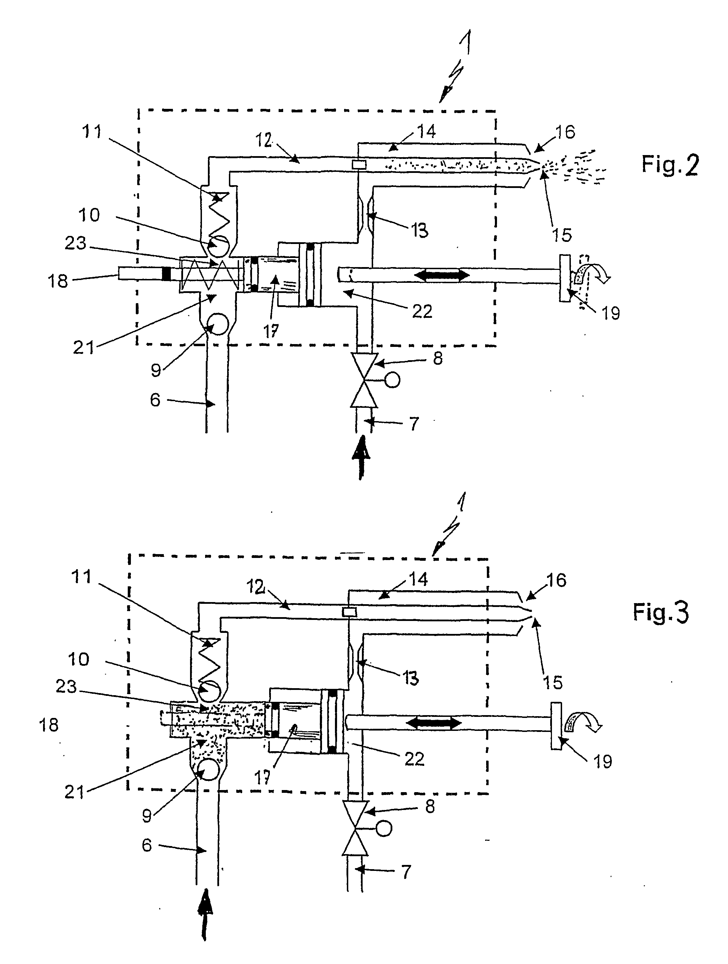

Befindet sich die Vorrichtung im Ruhezustand, wird keine Flüssigkeit über die Leitung 6, das Dosierventil 10 und die Leitung 12 zum Düsenmundstück 15 gefördert, vielmehr wird über die Leitung 6 und das Saug- bzw. Rückschlagventil 9 der Zylinderraum bzw. Pumpenhubraum 21 gefüllt und der Tandemkolben 17 in die in Fig. 3 dargestellte Ausgangsposition verschoben, so daß sich der Zylinderraum bzw. Pumpenhubraum 21 mit Flüssigkeit füllen kann, was in Fig. 3 angedeutet ist. Da der Zylinderraum 22 über die Drossel 13 mit der Umgebung in Verbindung steht, kann der Tandemkolben 17 sich in seine Ausgangslage bewegen.

Soll gesprüht werden, wird über das Druckluftventil 8 in der Leitung 7 geöffnet. Dadurch gelangt Druckluft in den Zylinderraum 22 und über die Blende 13 in den Sprühluftkanal 14 zur Sprühluftaustrittsdüse 16. Aufgrund des Druckluftüberschusses aus der Leitung 7 und des Rückstaues durch die Blende 13 wird der Tandemkolben 17 in Richtung des Zylinderraumes bzw. Pumpenhubraumes 21 verschoben, wodurch die Flüssigkeit aus diesem Raum über das Dosierventil 10 und die Leitung 12 dem Düsenmundstück 15 zugeführt wird.

Über die spezielle Ausführung der Sprühluftaustrittsdüse 16 und des Flüssigkeitsdüsenmundstückes 15 lassen sich unterschiedliche Strahlbilder, wie z.B. Flach-, Voll- oder Hohlstrahl erzeugen. Dabei kann je nach Position der Mundstücke 15 und 16 der Düsen eine Innenmischung oder eine Außenmischung vorgenommen werden, dies ist im wesentlichen auch von den zu versprühenden Fluiden abhängig.

Nach Schließen des Druckluftventiles 8 entspannt sich der Luftdruck im Zylinderraum 22 über die Blende 13 und den Sprühluftkanal 14.

Dadurch wird der Tandemkolben 17 durch den in der Flüssigkeitsleitung 6 herrschenden Druck über das Rückschlagventil 9 in seine Ausgangslage verschoben und der Zylinder- bzw. Pumpenhubraum 21 für den nächsten Dosiervorgang mit der zu versprühenden Flüssigkeit gefüllt.

Ohne daß dies näher dargestellt ist, kann die Vorrichtung 1 in einem gemeinsamen Gehäuse etwa im Umfange der gestrichelten Linie untergebracht sein. Dabei ist es möglich, die Kolbenverlängerung 18 z.B. zu einem gemeinsamen Gehäuse nach außen zu führen, um die jeweiligen Kolbenhübe sichtbar zu machen. Dabei wird bewirkt, daß die Kolbenverlängerung 18 nach Öffnen des Ventiles 8 mit dem Tandemkolben 17 beim Dosierhub nach außen verschoben wird. Bei Schließen des Ventiles 8 wird dann der Tandemkolben 17 einschließlich der Kolbenverlängerung 18 wieder zurückverschoben, so daß die Kolbenverlängerung 18 im Gehäuse verschwindet.

Um eine sehr genaue Einstellung der Menge an zu versprühender Flüssigkeit vornehmen zu können, ist eine Hubbegrenzung 19 vorgesehen, die je nach Eintauchtiefe in den Zylinderraum 12 den Weg des Tandemkolbens 17 verändert. Wie sich aus dem Obigen ergibt, wird die Dosierhubbewegung des Tandemkolbens 17 in Richtung des Flüssigkeitszylinderraumes 21 durch den Fluidstaudruck im Zylinderraum 22, der sich zwischen Ventil 8 und Blende 13 aufbaut, durchgeführt.

Natürlich ist das beschriebene Ausführungsbeispiel der Erfindung noch in vielfacher Hinsicht abzuändern, ohne den beanspruchten Grundgedanken zu verlassen. So ist die Erfindung zum einen nicht auf das Versprühen bestimmter Fluide eingeschränkt, zum anderen auch nicht auf das in den Figuren dargestellte Übersetzungsverhältnis des Tandemkolbens 17, die Gestaltung der Düsen 15/16 u. dgl. mehr.

## Patentansprüche

1. Vorrichtung zur Aufbringung von mittels eines Fluides, insbesondere Druckluft, versprühbaren Flüssigkeiten, wie Farböle, Schmierstoffe, Desinfektionslösungen, Reinigungslösungen od. dgl., mit einer Druckluftzufuhrleitung und einer Flüssigkeitszufuhrleitung,
**dadurch gekennzeichnet,**
**daß** die Flüssigkeitszufuhrleitung (6) einen Zylinderraum (21) eines Tandemkolbens (17) und die Druckluftzufuhrleitung (7) den anderen Zylinderraum (22) des Tandemkolbens (17) beaufschlagt, wobei die Ableitleitungen (12) der Flüssigkeit aus dem entsprechenden Zylinderraum und der Druckluft (14) aus dem anderen Zylinderraum die Sprühdüse (15,16) beaufschlagen.

2. Vorrichtung nach Anspruch 1,
**dadurch gekennzeichnet,**
**daß** im Fördersystem der Flüssigkeitszufuhrleitung (4,6), wie an sich bekannt, ein Druckhalteventil (20) und in der Druckluftzufuhrleitung (7) ein Steuerventil (8) vorgesehen ist.

3. Vorrichtung nach Anspruch 1 oder 2,
**dadurch gekennzeichnet,**
**daß** in der Flüssigkeitsabfuhrleitung (12) zur Düse ein Rückschlagventil (10,11) und in der Druckluftableitung (14) zur Düse eine Drossel (13) vorgesehen ist.

4. Vorrichtung nach einem der vorangehenden Ansprüche,
**dadurch gekennzeichnet,**
**daß** der Tandemkolben (17) von einem Hubbegrenzer (19) mit Feineinstellung zur Einstellung eines definierten Volumens des Flüssigkeitszylinderraumes (21) versehen ist.

## Claims

1. Device for the application of liquids which are sprayable by means of a fluid, in particular compressed air, such as dye oils, lubricants, disinfectant solutions, cleaning solutions or the like, with a compressed-air supply line and a liquid supply line, **characterized in that** the liquid supply line (6) acts on one cylinder space (21) of a tandem piston (17) and the compressed-air supply line (7) acts on the other cylinder space (22) of the tandem piston (17), the offtake lines (12) of the liquid from the corresponding cylinder space and of the compressed air (14) from the other cylinder space acting on the spray nozzle (15, 16).

2. Device according to Claim 1, **characterized in that** a pressure-maintaining valve (20) is, as known per se, provided in the feed system of the liquid supply line (4, 6) and a control valve (8) is provided in the compressed-air supply line (7).

3. Device according to Claim 1 or 2, **characterized in that** a non-return valve (10, 11) is provided in the liquid offtake line (12) to the nozzle and a choke (13) is provided in the compressed-air offtake (14) to the nozzle.

4. Device according to one of the preceding claims, **characterized in that** the tandem piston (17) is by a stroke-limiter (19) provided with fine adjustment for adjusting a defined volume of the liquid cylinder space (21).

## Revendications

1. Dispositif pour l'application au moyen d'un fluide, en particulier de l'air comprimé, de liquides à pulvériser tels que des huiles colorantes, des lubrifiants, des solutions désinfectantes, des solutions détergentes ou autres, avec une conduite d'alimentation en air comprimé et une conduite d'alimentation en liquide,
**caractérisé**
**en ce que** la conduite d'alimentation en liquide (6) alimente une chambre de cylindre (21) d'un tandem de pistons (17) et la conduite d'alimentation en air comprimé (7) l'autre chambre de cylindre (22) du tandem de pistons (17), les conduites d'évacuation (12) de liquide de la chambre de cylindre concernée et d'air comprimé (14) de l'autre chambre de cylindre alimentant la buse de pulvérisation (15, 16).

2. Dispositif selon la revendication 1,
**caractérisé**
**en ce que** dans le système de circulation de la conduite d'alimentation en liquide (4, 6), il est prévu, comme il est connu en soi, une soupape de pressurisation (20) et dans la conduite d'alimentation en air comprimé (7) une soupape de commande (8).

3. Dispositif selon la revendication 1 ou 2,
**caractérisé**
**en ce que** dans la conduite d'évacuation de liquide (12) vers la buse est prévue une soupape de non-retour (10, 11) et dans la conduite d'évacuation d'air comprimé (14) vers la buse un étrangleur (13).

4. Dispositif selon l'une quelconque des revendications précédentes,
**caractérisé**
**en ce que** le tandem de pistons (17) est doté d'un limiteur de course (19) avec un dispositif de réglage fin pour régler un volume défini de la chambre de cylindre de liquide (21).
